# EUROPÄISCHE PATENTSCHRIFT

(11) **EP 3 911 996 B1**
(45) Veröffentlichungstag und Bekanntmachung des Hinweises auf die Patenterteilung: **07.01.2026**
(21) Anmeldenummer: 20702073.6
(22) Anmeldetag: 10.01.2020
(51) Int. Cl.: G02C 7/10, G02B 25/00

(54) **OPTISCHES ELEMENT**
OPTICAL ELEMENT
ÉLÉMENT OPTIQUE

(30) Priorität: 17.01.2019 DE 102019101187
(43) Veröffentlichungstag der Anmeldung: 24.11.2021
(73) Patentinhaber: A. Schweizer GmbH Optische Fabrik, 91301 Forchheim (DE)
(72) Erfinder: SCHÜTTINGER, Alfred, 91301 Forchheim (DE)
(74) Vertreter: Hafner & Kohl PartmbB
(86) Internationale Anmeldenummer: PCT/EP2020/050521
(87) Internationale Veröffentlichungsnummer: WO 2020/148182

(56) Entgegenhaltungen:
- JP-A- 2015 148 673
- US-A- 5 975 695
- US-A1- 2004 119 940
- US-A1- 2011 141 432
- US-A1- 2017 176 775

## Beschreibung

Die Erfindung betrifft ein optisches Element, nämlich eine optische Linse für eine optische Sehhilfeeinrichtung, insbesondere eine Sehhilfeeinrichtung zum Ausgleich von Sehschwächen, umfassend einen eine Grundfläche aufweisenden Grundkörper.

Entsprechende optische Elemente sind, z. B. in Form von optischen Linsen, dem Grunde nach aus dem Stand der Technik bekannt. Entsprechende optische Elemente bilden typischerweise die wesentlichen Komponenten von Sehhilfeeinrichtungen, wie z. B. Sehhilfebrillen, -lupen, etc., zum Ausgleich von Sehschwächen.

Entsprechende optische Elemente weisen typischerweise bestimmte optische Eigenschaften und damit verbunden eine bestimmte Lichtdurchlässigkeit (Transmission) auf.

Wenngleich eine Vielzahl von optischen Elementen mit unterschiedlichen optischen Eigenschaften bekannt sind, besteht, insbesondere im Hinblick auf besondere Anwendungsgebiete, ein Bedarf nach weiterentwickelten optischen Elementen, welche einen ausreichenden Schutz des Sehapparats eines Benutzers gewährleisten.

Hierbei ist insbesondere dem Aspekt eines ausreichenden Schutzes vor kurzwelligem Licht, d. h. Licht mit einem vergleichsweise hohen Blauanteil, welches z. B. von Bildschirmen, Leuchtdioden, Scheinwerfern, Straßenbeleuchtungen, emittiert wird, besondere Beachtung zu geben, als die Wirkung von kurzwelligem Licht auf den menschlichen Sehapparat Gegenstand diverser Studien, in welchen untersucht wird, ob von kurzwelligem Licht die Gefahr einer möglichen Schädigung des Sehapparats ausgeht, ist.

Ansätze zur Ausbildung von optischen Elementen, welche einen entsprechenden einen Schutz vor kurzwelligen Licht gewährleisten sollen, sind zwar dem Grunde nach bekannt, allerdings weisen diese optischen Elemente über den Bereich des kurzwelligen Lichts hinaus typischerweise eine von Nutzern regelmäßig als zu dunkel empfundene geringe Transmission auf.

Insgesamt besteht daher ein Verbesserungs- bzw. Weiterentwicklungsbedarf nach optischen Elementen, welche einen ausreichenden Schutz vor kurzwelligem Licht gewährleisten.

Optische Elemente mit verschiedenen optischen Eigenschaften sind aus den Dokumenten US 2017/176775 A1, US 5 975 695 A, JP 2015/148673 A und US 2004/119940 A1 bekannt.

Der Erfindung liegt damit die Aufgabe zugrunde, ein verbessertes optisches Element anzugeben.

Die Aufgabe wird durch eine optische Linse gemäß Anspruch 1 gelöst. Die hierzu abhängigen Ansprüche betreffen mögliche Ausführungsformen der optischen Linse gemäß Anspruch 1.

Die Erfindung ist durch die Gegenstände der beigefügten Ansprüche definiert, welche unter Berücksichtigung der Beschreibung und Zeichnungen auszulegen sind.

Das hierin beschriebene optische Element ist eine optische Linse für eine optische Sehhilfeeinrichtung und zeichnet sich durch besondere optische Eigenschaften aus, welche im Besonderen eine gezielte Absorption von kurzwelligem Licht, d. h. Licht mit einer Wellenlänge in einem Bereich zwischen 400 und 445 nm, insbesondere Licht mit einer Wellenlänge von ca. 445 nm, d. h. Licht mit einem vergleichsweise hohen Blauanteil ermöglichen. Das optische Element ist damit insbesondere eingerichtet, Licht mit einem vergleichsweise hohen Blauanteil, d. h. Licht, wie es z. B. von Bildschirmen, Leuchtdioden, Scheinwerfern, Straßenbeleuchtungen, etc., emittiert wird, zu absorbieren. Das optische Element weist sonach - wie sich im Weiteren ergibt zumindest abschnittsweise - optische Eigenschaften, d. h. insbesondere entsprechende Absorptions- bzw. Transmissionseigenschaften, auf, welche eine Absorption von Licht mit einem vergleichsweise hohen Blauanteil, d. h. Licht, wie es z. B. von Bildschirmen, Leuchtdioden, Scheinwerfern, Straßenbeleuchtungen, etc., emittiert wird, ermöglichen.

Das optische Element umfasst einen Grundkörper. Der Grundkörper weist eine Grundfläche auf. Der Grundkörper ist linsenartig bzw. -förmig ausgebildet; der Grundkörper kann sonach z. B. als Linsenkörper ausgebildet sein. Die Grundfläche eines entsprechend ausgebildeten Grundkörpers ist durch die, gegebenenfalls konvex oder konkav gekrümmte bzw. gewölbte, Linsenfläche gebildet.

Die Grundfläche des Grundkörpers des optischen Elements weist wenigstens zwei Grundflächenabschnitte, d. h. einen ersten und wenigstens einen zweiten bzw. weiteren Grundflächenabschnitt, auf. Die wenigstens zwei Grundflächenabschnitte unterscheiden sich in ihren optischen Eigenschaften, d. h. insbesondere in ihren absorptiven bzw. transmissiven Eigenschaften. Die Grundfläche des Grundkörpers des optischen Elements ist sonach in wenigstens zwei sich in ihren optischen Eigenschaften, d. h. insbesondere in ihren absorptiven bzw. transmissiven Eigenschaften, unterscheidende Grundflächenabschnitte aufgeteilt bzw. unterteilt, welche durch unterschiedliche optische Eigenschaften, d. h. insbesondere unterschiedliche absorptive bzw. transmissive Eigenschaften, voneinander abgrenzbar sind.

Im Hinblick auf die jeweiligen flächenmäßigen Abmessungen der Grundflächenabschnitte gilt grundsätzlich, dass diese flächenmäßig gleich oder unterschiedlich bemessen sein können. Die Grundflächenabschnitte können sonach einen gleichen oder unterschiedlichen flächenmäßigen Anteil der Gesamtfläche der Grundfläche des Grundkörpers einnehmen.

Ein erster Grundflächenabschnitt weist in einem Wellenlängenbereich zwischen 400 nm und 445 nm eine Transmission kleiner oder gleich 60% und in einem Wellenlängenbereich oberhalb 445 nm, inzwischen 445 nm und 600 nm eine Transmission größer oder gleich 60% auf. Der erste Grundflächenabschnitt weist damit in dem Wellenlängenbereich zwischen 400 nm und 445 nm, insbesondere bei 445 nm, eine Absorption größer oder gleich 40% und in dem Wellenlängenbereich oberhalb 445 nm, d. h. insbesondere in dem Wellenlängenbereich zwischen 445 nm und 600 nm, eine Absorption kleiner oder gleich 40% auf. Der erste Grundflächenabschnitt zeigt sonach nur in dem Wellenlängenbereich bis 445 nm eine gezielte Absorption bzw. Schwächung von Licht.

Ein zweiter Grundflächenabschnitt weist in einem Wellenlängenbereich zwischen 400 nm und 445 nm, insbesondere bei 445 nm, ebenso eine Transmission kleiner oder gleich 60% und - im Unterschied zu dem ersten Grundflächenabschnitt - in einem Wellenlängenbereich oberhalb 445 nm, d. h. insbesondere in einem Wellenlängenbereich zwischen 445 nm und 600 nm, ebenso eine Transmission kleiner oder gleich 60% auf. Der zweite Grundflächenabschnitt weist damit in dem Wellenlängenbereich zwischen 400 nm und 445 nm, insbesondere bei 445 nm, eine Absorption größer oder gleich 40% und in dem Wellenlängenbereich oberhalb 445 nm, d. h. insbesondere in dem Wellenlängenbereich zwischen 445 nm und 600 nm, ebenso eine Absorption größer oder gleich 40% auf. Der zweite Grundflächenabschnitt zeigt sonach nicht nur in dem Wellenlängenbereich bis 445 nm eine gezielte Absorption bzw. Schwächung von Licht; der zweite Grundflächenabschnitt zeigt sonach über den gesamten Wellenlängenbereich eine gezielte Absorption bzw. Schwächung von Licht.

Die beschriebene Transmission bzw. Absorption der beiden Grundflächenabschnitte in den genannten Wellenlängenbereichen zwischen 400 und 445 nm ermöglicht insgesamt eine gezielte Absorption bzw. Schwächung von kurzwelligem Licht, d. h. insbesondere von Licht mit einer Wellenlänge von 445 nm oder niedriger. Das optische Element zeigt sonach eine sehr geringe bzw. gegebenenfalls sogar gar keine Durchlässigkeit von kurzwelligem Licht, d. h. insbesondere von Licht mit einer Wellenlänge von 445 nm oder niedriger.

Die unterschiedlichen optischen Eigenschaften der beiden Grundflächenabschnitte resultieren sonach in dem folgenden Eigenschaftsspektrum des optischen Elements: in dem Wellenlängenbereich oberhalb 445 nm bedingt der erste Grundflächenabschnitt eine nur geringe bzw. gegebenenfalls sogar keine Beeinträchtigung der Durchlässigkeit von Licht entsprechender Wellenlänge, wohingegen der zweite Grundflächenabschnitt auch hier eine sehr geringe bzw. gegebenenfalls sogar gar keine Durchlässigkeit von Licht entsprechender Wellenlänge bedingt. Der erste Grundflächenabschnitt ermöglicht sonach in einem Wellenlängenbereich oberhalb 445 nm typischerweise eine ausreichende Durchlässigkeit, sodass einem Nutzer das Durchblicken des ersten Grundflächenabschnitts in einem Wellenlängenbereich oberhalb 445 nm nicht zu dunkel erscheint. Dagegen ermöglicht der zweite Grundflächenabschnitt über den gesamten Wellenlängenbereich einen Schutz vor zu starker, gegebenenfalls schädlicher, Lichteinstrahlung.

Insgesamt liegt damit ein verbessertes optisches Element vor.

In einer zweckmäßigen Ausführungsform kann der erste Grundflächenabschnitt in einem Wellenlängenbereich zwischen 400 nm und 445 nm eine Transmission kleiner oder gleich 50%, insbesondere kleiner 40%, bevorzugt kleiner oder gleich 30%, und in einem Wellenlängenbereich zwischen 445 nm und 575 nm eine Transmission größer oder gleich 70%, insbesondere größer oder gleich 80%, bevorzugt größer oder gleich 90%, besonders bevorzugt größer oder gleich 95%, aufweisen. Der zweite Grundflächenabschnitt kann in einem Wellenlängenbereich zwischen 400 nm und 445 nm eine Transmission kleiner oder gleich 40% und in einem Wellenlängenbereich zwischen 445 nm und 575 nm eine Transmission kleiner oder gleich 50% aufweisen. Dies verbessert die optischen Eigenschaften des optischen Elements einerseits im Hinblick auf die Absorption von kurzwelligem Licht und andererseits im Hinblick auf die Transmission von mittel- bzw. langwelligem Licht.

Der erste und der zweite Grundflächenabschnitt können in einem Wellenlängenbereich unterhalb 400 nm jeweils eine Transmission von weniger als 10% Transmission, insbesondere weniger als 5% Transmission, bevorzugt 0% Transmission, aufweisen. Dies verbessert die optischen Eigenschaften des optischen Elements im Hinblick auf die Absorption von kurzwelligem Licht weiter. Insbesondere kann derart ein sehr starker, gegebenenfalls sogar vollständiger, Schutz vor Licht mit einer Wellenlänge unterhalb 400 nm gewährleistet werden.

Die Transmission des ersten Grundflächenabschnitts steigt in einem Wellenlängenbereich zwischen 445 nm und 500 nm wenigstens um den Faktor 1,5 an. Die Transmission des ersten Grundflächenabschnitts kann sich in dem Wellenlängenbereich zwischen 445 nm und 500 nm sonach deutlich ändern, d. h. deutlich ansteigen. Die Transmission des ersten Grundflächenabschnitts kann z. B. 60% bei einer Wellenlänge von 445 nm auf einen Wert von mehr als 80%, insbesondere von wenigstens 90%, bei einer Wellenlänge von 500 nm ansteigen. Die optischen Eigenschaften des ersten Grundflächenabschnitts können sonach so gewählt sein, dass in einem Wellenlängenbereich unterhalb 445 nm kaum Transmission und in einem Wellenlängenbereich oberhalb 500 nm kaum Absorption erfolgt.

Der zweite Grundflächenabschnitt kann in einem Wellenlängenbereich zwischen 400 nm und 445 nm eine Transmission kleiner oder gleich 30% aufweisen. Dies verbessert die optischen Eigenschaften des zweiten Grundflächenabschnitts im Hinblick auf die Absorption von kurzwelligem Licht weiter.

Der zweite Grundflächenabschnitt kann in einem Wellenlängenbereich zwischen 445 nm und 575 nm, insbesondere in einem Wellenlängenbereich zwischen 445 nm und 550 nm, eine Transmission kleiner 50% aufweisen. Der zweite Grundflächenabschnitt kann sonach auch in dem Wellenlängenbereich zwischen 445 nm und 575 nm, insbesondere in einem Wellenlängenbereich zwischen 445 nm und 550 nm, bedingt durch eine vergleichsweise geringe Transmission eine gewisse Schutzwirkung aufweisen.

Dabei kann der zweite Grundflächenabschnitt, d. h. insbesondere ein zweiter Grundflächenabschnitt, welcher in einem Wellenlängenbereich zwischen 445 nm und 575 nm, insbesondere in einem Wellenlängenbereich zwischen 445 nm und 550 nm, eine Transmission kleiner 50% aufweist, in einem Wellenlängenbereich zwischen 575 nm und 625 nm jedoch eine Transmission größer oder gleich 50%, insbesondere eine Transmission in einem Bereich zwischen 40 und 60%, aufweisen. Die Schutzwirkung des zweiten Grundflächenabschnitts kann in einem Wellenlängenbereich oberhalb 575 nm sonach im Vergleich abnehmen, gleichermaßen ist die bisweilen als störend empfundene Verdunklung in einem Wellenlängenbereich oberhalb 575 nm reduziert.

Mit der gleichen Zielsetzung kann der zweite Grundflächenabschnitt, d. h. insbesondere ein zweiter Grundflächenabschnitt, welcher in einem Wellenlängenbereich zwischen 445 nm und 575 nm, insbesondere in einem Wellenlängenbereich zwischen 445 nm und 550 nm, eine Transmission kleiner 50% und in einem Wellenlängenbereich zwischen 575 nm und 625 nm eine Transmission größer oder gleich 50% aufweist, in einem Wellenlängenbereich zwischen 625 nm und 650 nm eine Transmission in einem Bereich zwischen 50 und 60% aufweisen.

Ebenso mit der gleichen Zielsetzung kann der zweite Grundflächenabschnitt, d. h. insbesondere ein zweiter Grundflächenabschnitt, welcher in einem Wellenlängenbereich zwischen 445 nm und 575 nm, insbesondere in einem Wellenlängenbereich zwischen 445 nm und 550 nm, eine Transmission kleiner 50% und in einem Wellenlängenbereich zwischen 575 nm und 625 nm eine Transmission größer oder gleich 50% und in einem Wellenlängenbereich zwischen 625 nm und 650 nm eine Transmission in einem Bereich zwischen 50 und 60% aufweist, in einem Wellenlängenbereich zwischen 650 nm und 750 nm eine Transmission in einem Bereich zwischen 60 und 85% aufweisen.

Insbesondere ist es mit der gleichen Zielsetzung denkbar, dass der zweite Grundflächenabschnitt, d. h. insbesondere ein zweiter Grundflächenabschnitt, welcher in einem Wellenlängenbereich zwischen 445 nm und 575 nm, insbesondere in einem Wellenlängenbereich zwischen 445 nm und 550 nm, eine Transmission kleiner 50% und in einem Wellenlängenbereich zwischen 575 nm und 625 nm eine Transmission größer oder gleich 50% und in einem Wellenlängenbereich zwischen 625 nm und 650 nm eine Transmission in einem Bereich zwischen 50 und 60% und in einem Wellenlängenbereich zwischen 650 nm und 750 nm eine Transmission in einem Bereich zwischen 60 und 85% aufweist, in einem Wellenlängenbereich zwischen 650 nm und 750 nm einen, insbesondere rampenartigen, Anstieg der Transmission von 60% auf 85% aufweisen.

Der zweite Grundflächenabschnitt kann in einem Wellenlängenbereich zwischen 445 nm und 600 nm, insbesondere in einem Wellenlängenbereich zwischen 445 nm und 550 nm, jedoch auch eine Transmission kleiner oder gleich 20% aufweisen. Mithin kann ein entsprechender zweiter Grundflächenabschnitt in dem Wellenlängenbereich zwischen 445 nm und 600 nm, insbesondere in dem Wellenlängenbereich zwischen 445 nm und 550 nm, eine ausreichende Schutzwirkung bedingen.

Es ist denkbar, dass der zweite Grundflächenabschnitt in einem Wellenlängenbereich zwischen 600 nm und 660 nm eine Transmission in einem Bereich zwischen 20 und 50% aufweist. Insbesondere kann der zweite Grundflächenabschnitt in einem Wellenlängenbereich zwischen 600 nm und 660 nm einen, insbesondere rampenartigen, Anstieg der Transmission von 20% auf 50% aufweisen. Der zweite Grundflächenabschnitt kann in dem Wellenlängenbereich zwischen 600 nm und 660 nm sonach weiterhin eine vergleichsweise geringe Durchlässigkeit für Licht entsprechender Wellenlänge zeigen, welche jedoch allmählich, insbesondere rampenartig, ansteigen kann.

In einem Wellenlängenbereich zwischen 660 nm und 700 nm kann der zweite Grundflächenabschnitt eine Transmission oberhalb 50%, insbesondere oberhalb 80%, aufweisen. Insbesondere kann der zweite Grundflächenabschnitt in dem Wellenlängenbereich zwischen 660 nm und 700 nm einen, insbesondere rampenartigen, Anstieg der Transmission von 50% auf 85% aufweisen. Der zweite Grundflächenabschnitt kann in dem Wellenlängenbereich oberhalb 660 nm sonach eine vergleichsweise hohe Durchlässigkeit für Licht entsprechender Wellenlänge zeigen, welche jedoch weiterhin, insbesondere rampenartig, ansteigen kann.

Die transmissiven Eigenschaften des ersten Grundflächenabschnitts können durch wenigstens eine dem ersten Grundflächenabschnitt zugeordnete erste optische, insbesondere dichroitische, Filtereinrichtung, insbesondere Langpassfiltereinrichtung, ausgebildet sein. Die optischen Eigenschaften des ersten Grundflächenabschnitts können sonach die Charakteristik einer optischen Langpassfiltereinrichtung bzw. eines optischen Langpassfilters haben. Die Cut-On-Wellenlänge der optischen Langpassfiltereinrichtung kann in einem Bereich zwischen 400 und 435 nm liegen.

Ebenso können die transmissiven Eigenschaften des zweiten Grundflächenabschnitts durch wenigstens eine dem zweiten Grundflächenabschnitt zugeordnete weitere optische, insbesondere dichroitische, Filtereinrichtung, insbesondere Langpassfiltereinrichtung, ausgebildet sein. Die optischen Eigenschaften des zweiten Grundflächenabschnitts können sonach die Charakteristik einer optischen Langpassfiltereinrichtung bzw. eines optischen Langpassfilters haben. Die Cut-On-Wellenlänge der optischen Langpassfiltereinrichtung kann in einem Bereich zwischen 435 nm und 450 nm oder oberhalb liegen.

Die erste optische Filtereinrichtung und die zweite optische Filtereinrichtung können jeweils an oder in dem optischen Element respektive an oder in dem Grundkörper angeordnet oder ausgebildet sein.

Eine Anordnung oder Ausbildung an dem optischen Element respektive dem Grundkörper bedeutet typischerweise, dass die jeweilige optische Filtereinrichtung auf einem entsprechenden Grundflächenabschnitt des Grundkörpers angeordnet oder ausgebildet ist. Die optische Filtereinrichtung kann in diesem Fall z. B. durch eine zumindest abschnittsweise Beschichtung der Grundfläche des Grundkörpers gebildet sein. In der Variante, in welcher die jeweilige optische Filtereinrichtung auf dem optischen Element respektive dem Grundkörper angeordnet oder ausgebildet ist, kann die optische Filtereinrichtung z. B. durch eine, insbesondere auf einem Metall bzw. einer Metalllegierung oder einem Kunststoff basierende, Beschichtung des Grundkörpers ausgebildet sein. Eine Beschichtung kann über ein oder mehrere chemische und/oder physikalische Verfahren aufgebracht bzw. ausgebildet sein. Beispielsweise kann die Beschichtung durch eine Tauchbeschichtung aufgebracht bzw. ausgebildet sein, da diese typischerweise eine besonders homogene Schichtbildung bzw. - dicke ermöglicht.

Eine Anordnung oder Ausbildung in dem optischen Element bedeutet typischerweise, dass die jeweilige optische Filtereinrichtung innerhalb des optischen Elements respektive des Grundkörpers angeordnet oder ausgebildet ist. Die optische Filtereinrichtung kann in diesem Fall z. B. in Form von optisch wirksamen, d. h. insbesondere eine entsprechende Transmission bzw. Absorption herbeiführenden, anorganischen und/oder organischen Partikeln innerhalb des optischen Elements respektive des Grundkörpers verteilt angeordnet oder ausgebildet sein. In der Variante, in welcher die jeweilige optische Filtereinrichtung in dem optischen Element respektive dem Grundkörper angeordnet oder ausgebildet ist, kann die jeweilige optische Filtereinrichtung z. B. durch insbesondere auf einem Metall bzw. einer Metalllegierung oder einem Kunststoff basierende Partikel ausgebildet sein.

In allen Fällen ist die erste optische Filtereinrichtung typischerweise im Bereich des ersten Grundflächenabschnitts angeordnet oder ausgebildet und die zweite optische Filtereinrichtung typischerweise im Bereich des zweiten Grundflächenabschnitts angeordnet oder ausgebildet.

Wie erwähnt, gilt im Hinblick auf die jeweiligen flächenmäßigen Abmessungen der Grundflächenabschnitte grundsätzlich, dass diese flächenmäßig gleich oder unterschiedlich bemessen sein können. Die Grundflächenabschnitte können sonach einen gleichen oder unterschiedlichen flächenmäßigen Anteil der Gesamtfläche der Grundfläche des Grundkörpers einnehmen. Der erste Grundflächenabschnitt kann sich sonach beispielsweise über einen flächenmäßigen Anteil von 50 bis 70% der Grundfläche erstrecken. Der zweite Grundflächenabschnitt kann sich entsprechend beispielsweise über einen flächenmäßigen Anteil von 50 bis 30% der Grundfläche erstrecken. Der erste Grundflächenabschnitt kann sonach flächenmäßig größer sein als der zweite Grundflächenabschnitt. Prinzipiell sind andere Konfigurationen denkbar.

Unabhängig von deren jeweiliger flächenanteilsmäßiger Erstreckung kann sich der erste Grundflächenabschnitt von einem ersten Randbereich der Grundfläche des Grundkörpers in Richtung eines, insbesondere dem ersten Randbereich gegenüberliegenden, zweiten Randbereichs der Grundfläche des Grundkörpers erstrecken. Entsprechend kann sich der zweite Grundflächenabschnitt von dem oder einem zweiten Randbereich der Grundfläche in Richtung des oder eines, insbesondere dem zweiten Randbereich gegenüberliegenden, ersten Randbereichs der Grundfläche erstrecken.

Die transmissiven Eigenschaften des ersten Grundflächenabschnitts können dabei in Richtung des zweiten Grundflächenabschnitts einen sich in Richtung der transmissiven Eigenschaften des zweiten Grundflächenabschnitts graduell ändernden Verlauf aufweisen. Alternativ oder ergänzend können die transmissiven Eigenschaften des zweiten Grundflächenabschnitts in Richtung des ersten Grundflächenabschnitts einen sich in Richtung der transmissiven Eigenschaften des ersten Grundflächenabschnitts graduell ändernden Verlauf aufweisen. Mithin kann ein Übergangsbereich gegeben sein, in dem die optischen Eigenschaften des einen Grundflächenabschnitts, insbesondere stetig, in die optischen Eigenschaften des anderen Grundflächenabschnitts übergehen.

Das optische Element respektive der Grundkörper ist, wie eingangs angedeutet, als optische Linse ausgebildet bzw. umfasst wenigstens eine solche. Das optische Element respektive der Grundkörper kann sonach durch einen lichtdurchlässigen Linsenkörper gebildet sein bzw. wenigstens einen solchen umfassen. Die Linse bzw. der Linsenkörper ist aus einem lichtdurchlässigen anorganischen oder organischen Material, d. h. typischerweise aus Glas oder Kunststoff, insbesondere PC oder PMMA, gebildet. Analoges gilt für andere Ausführungsformen des optischen Elements.

Das optische Element ist typischerweise einer optischen Sehhilfeeinrichtung, insbesondere zum Ausgleich von Sehschwächen, zuordenbar oder zugeordnet. Das optische Element kann dabei von einer, z. B. gestellartig bzw. -förmig respektive rahmenartig bzw. -förmig ausgebildeten, Halterungseinrichtung der optischen Sehhilfeeinrichtung gehaltert sein. Bei der Sehhilfeeinrichtung kann es sich z. B. um eine Brille oder um eine mobile oder stationäre Lupe handeln.

Das optische Element kann insoweit optisch vergrößernde Eigenschaften aufweisen, d. h. insbesondere mit einer Sehstärke bzw. Dioptrie versehen sein.

Die Erfindung betrifft neben dem optischen Element auch eine optische Sehhilfeeinrichtung, insbesondere zum Ausgleich von Sehschwächen, welche wenigstens ein wie hierin beschriebenes optisches Element umfasst. Die optische Sehhilfeeinrichtung kann eine, z. B. gestellartig bzw. -förmig respektive rahmenartig bzw. -förmig ausgebildete, Halterungseinrichtung zur Halterung des wenigstens einen optischen Elements umfassen. Die optische Sehhilfeeinrichtung kann z. B. als eine Brille, insbesondere eine Brille für Bildschirmanwendungen, oder als eine mobile oder stationäre Lupe ausgebildet sein.

Sämtliche Ausführungen im Zusammenhang mit dem optischen Element gelten analog für die optische Sehhilfeeinrichtung. Umgekehrt gelten sämtliche Ausführungen im Zusammenhang mit der optischen Sehhilfeeinrichtung analog für das optische Element.

Die Erfindung ist anhand von Ausführungsbeispielen in den Zeichnungsfiguren nochmals erläutert. Dabei zeigt:
- Fig. 1: eine Prinzipdarstellung eines optischen Elements gemäß einem Ausführungsbeispiel;
- Fig. 2a, 2b: je eine Prinzipdarstellung eines optischen Elements gemäß einem Ausführungsbeispiel;
- Fig. 3, 4: je eine optische Sehhilfeeinrichtung gemäß einem Ausführungsbeispiel; und
- Fig. 5, 6: je eine die optischen Eigenschaften eines optischen Elements gemäß einem Ausführungsbeispiel veranschaulichende Kurve.

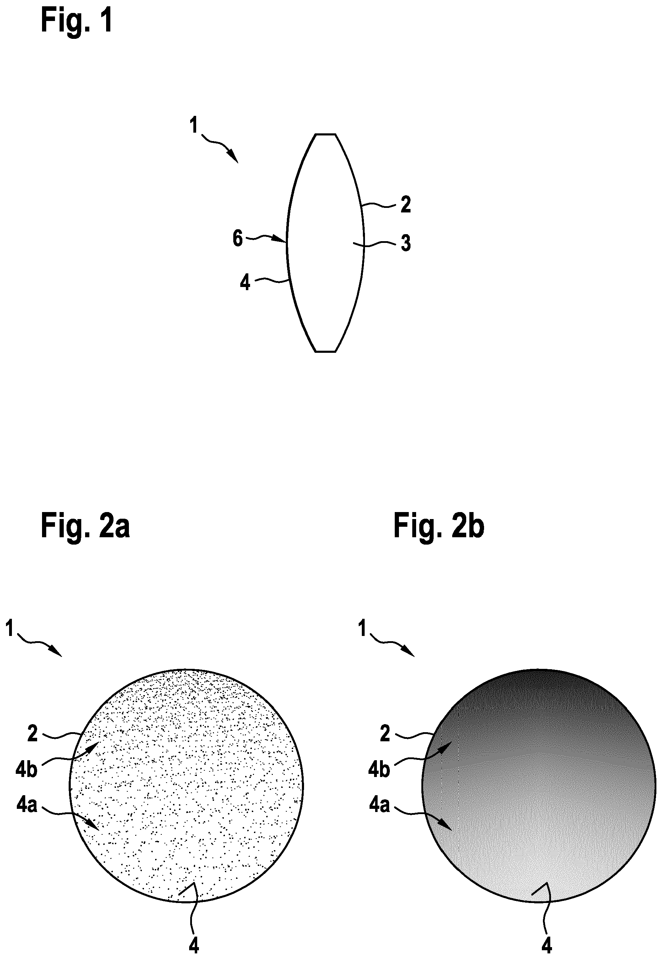

Die Fig. 1, 2 zeigen eine Prinzipdarstellung eines optischen Elements 1 gemäß einem Ausführungsbeispiel in einer perspektivischen Ansicht. Ersichtlich handelt es sich bei dem optischen Element 1 um eine einen Grundkörper 2 in Form eines auch als optisch Linse zu bezeichnenden bzw. zu erachtenden lichtdurchlässigen Linsenkörpers 3. Der Grundkörper 2 ist aus einem lichtdurchlässigen anorganischen oder organischen Material, d. h. typischerweise aus Glas oder Kunststoff, insbesondere PC oder PMMA, gebildet.

Der Grundkörper 2 weist, wie insbesondere anhand der Aufsichten gemäß Fig. 2a und Fig. 2b ersichtlich, eine Grundfläche 4 auf. Die Grundfläche 4 ist durch die, gegebenenfalls konvex oder konkav gekrümmte bzw. gewölbte, Linsenfläche gebildet. Die Fig. 2a und Fig. 2b zeigen denselben Grundkörper 2 in unterschiedlichen graphischen Darstellungen der im Weiteren näher erläuterten Grundflächenabschnitte 4a, 4b.

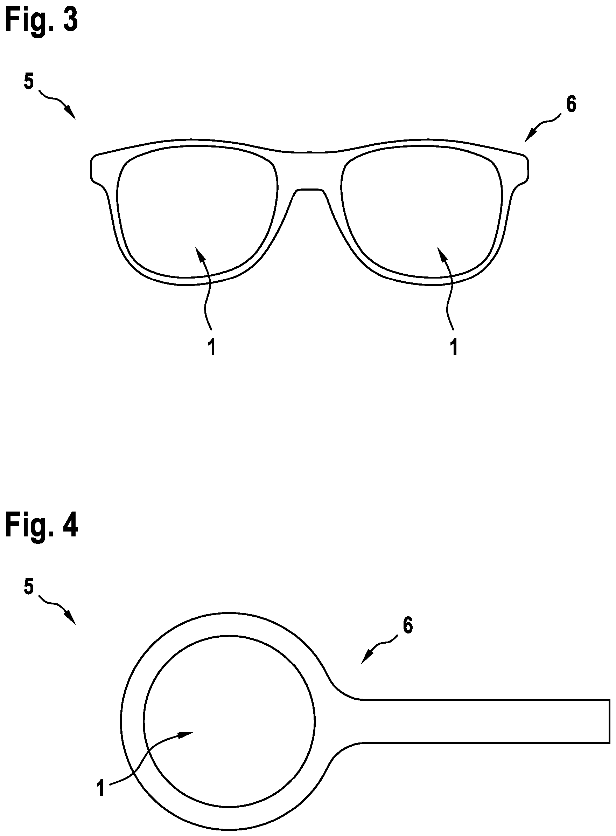

In den Fig. 3, 4 ist je eine optische Sehhilfeeinrichtung 5 gemäß einem Ausführungsbeispiel in einer perspektivischen Ansicht gezeigt. Bei der in Fig. 3 gezeigten Sehhilfeeinrichtung 5 handelt es sich um eine Brille, insbesondere für Bildschirmanwendungen. Bei der in Fig. 4 gezeigten Sehhilfeeinrichtung 5 handelt es sich um eine mobile Lupe. Denkbar wäre jedoch auch eine stationäre Lupe.

Die in den Ausführungsbeispielen gemäß den Fig. 3, 4 gezeigten Sehhilfeeinrichtungen 5 umfassen jeweils wenigstens ein entsprechendes optisches Element 1, welches in einer z. B. gestellartig bzw. -förmig respektive rahmenartig bzw. -förmig ausgebildeten Halterungseinrichtung 6 der jeweiligen Sehhilfeeinrichtung 5 gehaltert ist.

Das optische Element 1 kann in allen Ausführungsbeispielen optisch vergrößernde Eigenschaften aufweisen, d. h. insbesondere mit einer Sehstärke bzw. Dioptrie versehen sein.

Anhand der Fig. 2a, 2b ist ferner ersichtlich, dass die Grundfläche 4 des Grundkörpers 2 des optischen Elements 1 zwei Grundflächenabschnitte 4a, 4b, d. h. einen ersten Grundflächenabschnitt 4a und einen zweiten Grundflächenabschnitt 4b, aufweist. Die zwei Grundflächenabschnitte 4a, 4b unterscheiden sich in ihren optischen Eigenschaften, d. h. insbesondere in ihren absorptiven bzw. transmissiven Eigenschaften. Die Grundfläche 4 des Grundkörpers 2 des optischen Elements 1 ist sonach in zwei sich in ihren optischen Eigenschaften, d. h. insbesondere in ihren absorptiven bzw. transmissiven Eigenschaften, unterscheidende Grundflächenabschnitte 4a, 4b aufgeteilt bzw. unterteilt, welche durch unterschiedliche optische Eigenschaften, d. h. insbesondere unterschiedliche absorptive bzw. transmissive Eigenschaften, voneinander abgrenzbar sind.

Im Hinblick auf die jeweiligen flächenmäßigen Abmessungen der Grundflächenabschnitte 4a, 4b gilt grundsätzlich, dass diese flächenmäßig gleich oder unterschiedlich bemessen sein können. Die Grundflächenabschnitte 4a, 4b können sonach einen gleichen oder unterschiedlichen flächenmäßigen Anteil der Gesamtfläche der Grundfläche 4 des Grundkörpers 1 einnehmen.

In dem in den Fig. 1, 2 gezeigten Ausführungsbeispiel erstreckt sich der erste Grundflächenabschnitt 4a beispielhaft flächig über einen flächenmäßigen Anteil von ca. 50% der Grundfläche 4. Der zweite Grundflächenabschnitt 4b erstreckt sich entsprechend ebenso flächig über einen flächenmäßigen Anteil von 50% der Grundfläche 4. Der erste Grundflächenabschnitt 4a und der zweite Grundflächenabschnitt 4b sind in dem Ausführungsbeispiel sonach in etwa gleich groß. Prinzipiell sind jedoch andere Konfigurationen denkbar.

Anhand der Fig. 2a, 2b ist ferner ersichtlich, dass sich der erste Grundflächenabschnitt 4a von einem ersten Randbereich der Grundfläche 4 des Grundkörpers 2 in Richtung eines dem ersten Randbereich gegenüberliegenden zweiten Randbereichs der Grundfläche 4 des Grundkörpers 1 erstreckt. Entsprechend erstreckt sich der zweite Grundflächenabschnitt 4b von dem zweiten Randbereich der Grundfläche 4 in Richtung des dem zweiten Randbereich gegenüberliegenden ersten Randbereichs der Grundfläche 1.

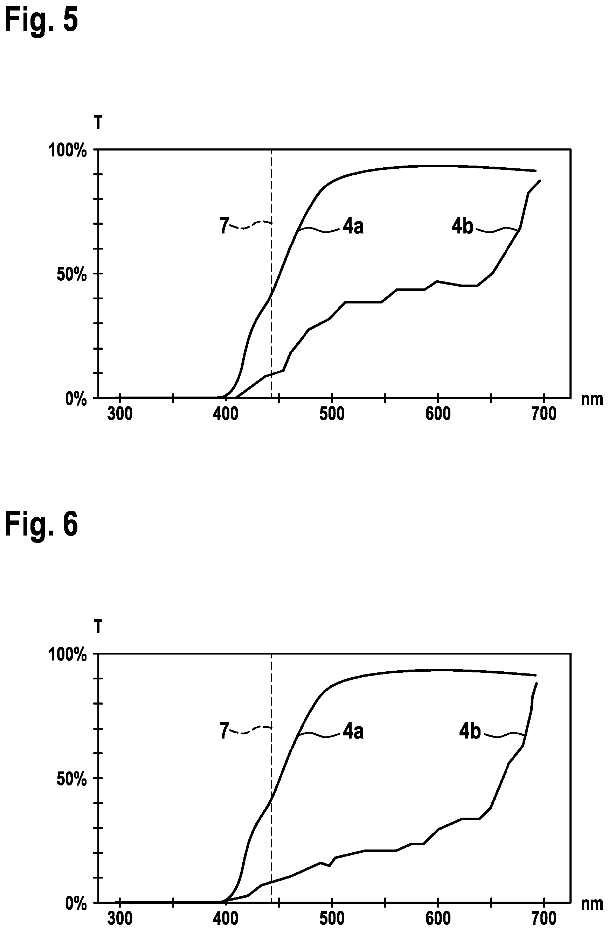

Wie im Weiteren im Zusammenhang mit den Fig. 5, 6 näher erläutert, unterscheiden sich die beiden Grundflächenabschnitte 4a, 4b in ihren optischen Eigenschaften, d. h. insbesondere in ihren absorptiven bzw. transmissiven Eigenschaften. Die Fig. 2a, 2b zeigen, dass die transmissiven Eigenschaften des ersten Grundflächenabschnitts 4a in Richtung des zweiten Grundflächenabschnitts 4b einen sich in Richtung der transmissiven Eigenschaften des zweiten Grundflächenabschnitts 4b graduell ändernden Verlauf aufweisen können. Alternativ oder ergänzend können die transmissiven Eigenschaften des zweiten Grundflächenabschnitts 4b in Richtung des ersten Grundflächenabschnitts einen sich in Richtung der transmissiven Eigenschaften des ersten Grundflächenabschnitts 4a graduell ändernden Verlauf aufweisen. Mithin kann ein Übergangsbereich gegeben sein, in dem die optischen Eigenschaften des einen Grundflächenabschnitts 4a, 4b, insbesondere stetig, in die optischen Eigenschaften des anderen Grundflächenabschnitts 4a, 4b übergehen.

Die optischen Eigenschaften beispielhafter Grundflächenabschnitte 4a, 4b sind in den Fig. 5, 6 näher gezeigt. Die Fig. 5, 6 zeigen jeweils die transmissiven Eigenschaften eines ersten und zweiten Grundflächenabschnitts 4a, 4b gemäß einem Ausführungsbeispiel veranschaulichende Kurven. Die Kurven zeigen jeweils einen Verlauf der Transmission T (y-Achse) jeweiliger Grundflächenabschnitte 4a, 4b in Abhängigkeit der Wellenlänge (x-Achse) in einem Wellenlängenbereich zwischen 300 nm und 700 nm.

Die Verläufe der Transmission des ersten Grundflächenabschnitts 4a sind in den Ausführungsbeispielen gemäß Fig. 5, 6 gleich, wohingegen sich die Verläufe der Transmission des zweiten Grundflächenabschnitts 4b in den Ausführungsbeispielen gemäß Fig. 5, 6 verschieden sind.

Anhand der Fig. 5, 6 ist ersichtlich, dass der erste Grundflächenabschnitt 4a in einem Wellenlängenbereich zwischen 400 nm und 445 nm eine Transmission kleiner oder gleich 60% und in einem Wellenlängenbereich oberhalb 445 nm, inzwischen 445 nm und 600 nm eine Transmission größer oder gleich 60% aufweist. Der erste Grundflächenabschnitt 4a weist damit in dem Wellenlängenbereich zwischen 400 nm und 445 nm, insbesondere bei 445 nm, eine Absorption größer oder gleich 40% und in dem Wellenlängenbereich oberhalb 445 nm, d. h. insbesondere in dem Wellenlängenbereich zwischen 445 nm und 600 nm, eine Absorption kleiner oder gleich 40% auf. Der erste Grundflächenabschnitt 4a zeigt sonach nur in dem Wellenlängenbereich bis 445 nm eine gezielte Absorption bzw. Schwächung von Licht.

Der zweite Grundflächenabschnitt 4b weist in einem Wellenlängenbereich zwischen 400 nm und 445 nm, insbesondere bei 445 nm, ebenso eine Transmission kleiner oder gleich 60% und - im Unterschied zu dem ersten Grundflächenabschnitt 4a - in einem Wellenlängenbereich oberhalb 445 nm, d. h. insbesondere in einem Wellenlängenbereich zwischen 445 nm und 600 nm, ebenso eine Transmission kleiner oder gleich 60% auf. Der zweite Grundflächenabschnitt 4b weist damit in dem Wellenlängenbereich zwischen 400 nm und 445 nm, insbesondere bei 445 nm, eine Absorption größer oder gleich 40% und in dem Wellenlängenbereich oberhalb 445 nm, d. h. insbesondere in dem Wellenlängenbereich zwischen 445 nm und 600 nm, ebenso eine Absorption größer oder gleich 40% auf. Der zweite Grundflächenabschnitt 4b zeigt sonach nicht nur in dem Wellenlängenbereich bis 445 nm eine gezielte Absorption bzw. Schwächung von Licht; der zweite Grundflächenabschnitt 4b zeigt sonach über den gesamten Wellenlängenbereich eine gezielte Absorption bzw. Schwächung von Licht.

Die beschriebene Transmission bzw. Absorption der beiden Grundflächenabschnitte 4a, 4b in den genannten Wellenlängenbereichen zwischen 400 und 445 nm ermöglicht insgesamt eine gezielte Absorption bzw. Schwächung von kurzwelligem Licht, d. h. insbesondere von Licht mit einer Wellenlänge von 445 nm oder niedriger. Das optische Element 1 zeigt sonach eine sehr geringe bzw. gegebenenfalls sogar gar keine Durchlässigkeit von kurzwelligem Licht, d. h. insbesondere von Licht mit einer Wellenlänge von 445 nm oder niedriger.

Die unterschiedlichen optischen Eigenschaften der beiden Grundflächenabschnitte 4a, 4b resultieren sonach in dem folgenden Eigenschaftsspektrum des optischen Elements 1: in dem Wellenlängenbereich oberhalb 445 nm bedingt der erste Grundflächenabschnitt 4a eine nur geringe bzw. gegebenenfalls sogar keine Beeinträchtigung der Durchlässigkeit von Licht entsprechender Wellenlänge, wohingegen der zweite Grundflächenabschnitt 4b auch hier eine sehr geringe bzw. gegebenenfalls sogar gar keine Durchlässigkeit von Licht entsprechender Wellenlänge bedingt. Der erste Grundflächenabschnitt 4a ermöglicht sonach in einem Wellenlängenbereich oberhalb 445 nm typischerweise eine ausreichende Durchlässigkeit, sodass einem Nutzer das Durchblicken des ersten Grundflächenabschnitts 4a in einem Wellenlängenbereich oberhalb 445 nm nicht zu dunkel erscheint. Dagegen ermöglicht der zweite Grundflächenabschnitt 4b über den gesamten Wellenlängenbereich einen Schutz vor zu starker, gegebenenfalls schädlicher, Lichteinstrahlung.

Anhand der Fig. 5, 6 ist ersichtlich, dass der erste Grundflächenabschnitt 4a in einem Wellenlängenbereich zwischen 400 nm und 445 nm eine Transmission kleiner oder gleich 50%, insbesondere kleiner 40%, bevorzugt kleiner oder gleich 30%, und in einem Wellenlängenbereich zwischen 445 nm und 575 nm eine Transmission größer oder gleich 70%, insbesondere größer oder gleich 80%, bevorzugt größer oder gleich 90%, besonders bevorzugt größer oder gleich 95%, aufweisen kann. Der zweite Grundflächenabschnitt 4b kann in einem Wellenlängenbereich zwischen 400 nm und 445 nm eine Transmission kleiner oder gleich 40% und in einem Wellenlängenbereich zwischen 445 nm und 575 nm eine Transmission kleiner oder gleich 50% aufweisen. Dies verbessert die optischen Eigenschaften des optischen Elements 1 einerseits im Hinblick auf die Absorption von kurzwelligem Licht und andererseits im Hinblick auf die Transmission von mittel- bzw. langwelligem Licht.

Anhand der Fig. 5, 6 ist ferner ersichtlich, dass der erste und der zweite Grundflächenabschnitt 4a, 4b in einem Wellenlängenbereich unterhalb 400 nm jeweils eine Transmission von weniger als 10% Transmission, insbesondere weniger als 5% Transmission, bevorzugt 0% Transmission, aufweisen können. Dies verbessert die optischen Eigenschaften des optischen Elements 1 im Hinblick auf die Absorption von kurzwelligem Licht weiter. Insbesondere kann derart ein sehr starker, gegebenenfalls sogar vollständiger, Schutz vor Licht mit einer Wellenlänge unterhalb 400 nm gewährleistet werden.

Die Fig. 5, 6 zeigen ferner, dass die Transmission des ersten Grundflächenabschnitts 4a in einem Wellenlängenbereich zwischen 445 nm und 500 nm wenigstens um den Faktor 1,5 ansteigen kann. Die Transmission des ersten Grundflächenabschnitts 4a kann sich in dem Wellenlängenbereich zwischen 445 nm und 500 nm sonach deutlich ändern, d. h. deutlich ansteigen. Insbesondere kann die Transmission des ersten Grundflächenabschnitts 4a von 60% bei einer Wellenlänge von 445 nm auf einen Wert von mehr als 80%, insbesondere von wenigstens 90%, bei einer Wellenlänge von 500 nm ansteigen. Die optischen Eigenschaften des ersten Grundflächenabschnitts 4a können sonach so gewählt sein, dass in einem Wellenlängenbereich unterhalb 445 nm kaum Transmission und in einem Wellenlängenbereich oberhalb 500 nm kaum Absorption erfolgt.

Anhand der Fig. 5, 6 ist ferner ersichtlich, dass der zweite Grundflächenabschnitt 4b in einem Wellenlängenbereich zwischen 400 nm und 445 nm eine Transmission kleiner oder gleich 30% aufweisen kann. Dies verbessert die optischen Eigenschaften des zweiten Grundflächenabschnitts 4b im Hinblick auf die Absorption von kurzwelligem Licht weiter.

Auch ist anhand der Fig. 5, 6 ersichtlich, dass der zweite Grundflächenabschnitt 4b in einem Wellenlängenbereich zwischen 445 nm und 575 nm, insbesondere in einem Wellenlängenbereich zwischen 445 nm und 550 nm, eine Transmission kleiner 50% aufweisen kann. Der zweite Grundflächenabschnitt 4b kann sonach auch in dem Wellenlängenbereich zwischen 445 nm und 575 nm, insbesondere in einem Wellenlängenbereich zwischen 445 nm und 550 nm, bedingt durch eine vergleichsweise geringe Transmission eine gewisse Schutzwirkung aufweisen.

Dabei kann der zweite Grundflächenabschnitt 4b, wie in Fig. 5 beispielhaft gezeigt, in einem Wellenlängenbereich zwischen 575 nm und 625 nm jedoch eine Transmission größer oder gleich 50%, insbesondere eine Transmission in einem Bereich zwischen 40 und 60%, aufweisen. Die Schutzwirkung des zweiten Grundflächenabschnitts 4b kann in einem Wellenlängenbereich oberhalb 575 nm sonach im Vergleich abnehmen, gleichermaßen ist die bisweilen als störend empfundene Verdunklung in einem Wellenlängenbereich oberhalb 575 nm reduziert.

Mit der gleichen Zielsetzung kann der zweite Grundflächenabschnitt 4b, wie in Fig. 5 beispielhaft gezeigt, in einem Wellenlängenbereich zwischen 625 nm und 650 nm eine Transmission in einem Bereich zwischen 50 und 60% aufweisen.

Ebenso mit der gleichen Zielsetzung kann der zweite Grundflächenabschnitt 4b, wie in Fig. 5 beispielhaft gezeigt, in einem Wellenlängenbereich zwischen 650 nm und 750 nm eine Transmission in einem Bereich zwischen 60 und 85% aufweisen.

Insbesondere ist es, wie ebenso in Fig. 5 gezeigt, mit der gleichen Zielsetzung denkbar, dass der zweite Grundflächenabschnitt 4b in einem Wellenlängenbereich zwischen 650 nm und 750 nm einen, insbesondere rampenartigen, Anstieg der Transmission von 60% auf 85% aufweisen kann.

Anhand von Fig. 6 ist ersichtlich, dass ein zweiter Grundflächenabschnitt 4b in einem Wellenlängenbereich zwischen 445 nm und 600 nm, insbesondere in einem Wellenlängenbereich zwischen 445 nm und 550 nm, insbesondere eine Transmission kleiner oder gleich 20% aufweisen kann. Mithin kann ein entsprechender zweiter Grundflächenabschnitt 4b in dem Wellenlängenbereich zwischen 445 nm und 600 nm, insbesondere in dem Wellenlängenbereich zwischen 445 nm und 550 nm, eine ausreichende Schutzwirkung bedingen.

Anhand der Fig. 6 ist ferner ersichtlich, dass der zweite Grundflächenabschnitt 4b in einem Wellenlängenbereich zwischen 600 nm und 660 nm eine Transmission in einem Bereich zwischen 20 und 50% aufweisen kann. Insbesondere kann der zweite Grundflächenabschnitt 4b in einem Wellenlängenbereich zwischen 600 nm und 660 nm einen, insbesondere rampenartigen, Anstieg der Transmission von 20% auf 50% aufweisen. Der zweite Grundflächenabschnitt 4b kann in dem Wellenlängenbereich zwischen 600 nm und 660 nm sonach weiterhin eine vergleichsweise geringe Durchlässigkeit für Licht entsprechender Wellenlänge zeigen, welche jedoch allmählich, insbesondere rampenartig, ansteigen kann.

Wie Fig. 6 ferner zeigt, kann der zweite Grundflächenabschnitt 4b in einem Wellenlängenbereich zwischen 660 nm und 700 nm eine Transmission oberhalb 50%, insbesondere oberhalb 80%, aufweisen. Insbesondere kann der zweite Grundflächenabschnitt 4b in dem Wellenlängenbereich zwischen 660 nm und 700 nm einen, insbesondere rampenartigen, Anstieg der Transmission von 50% auf 85% aufweisen. Der zweite Grundflächenabschnitt 4b kann in dem Wellenlängenbereich oberhalb 660 nm sonach eine vergleichsweise hohe Durchlässigkeit für Licht entsprechender Wellenlänge zeigen, welche jedoch weiterhin, insbesondere rampenartig, ansteigen kann.

Die in den Fig. 5, 6 eingetragene gestrichelte Linie 7 deutet einen bei ca. 445 nm liegenden Peak eines Spektrums eines von einer Leuchtdiode emittierten Lichts an.

Für alle Ausführungsbeispiele gilt, dass die transmissiven Eigenschaften des ersten Grundflächenabschnitts 4a durch wenigstens eine dem ersten Grundflächenabschnitt 4a zugeordnete erste optische, insbesondere dichroitische, Filtereinrichtung, insbesondere Langpassfiltereinrichtung, ausgebildet sein können. Die optischen Eigenschaften des ersten Grundflächenabschnitts 4a können sonach die Charakteristik einer optischen Langpassfiltereinrichtung bzw. eines optischen Langpassfilters haben. Die Cut-On-Wellenlänge der optischen Langpassfiltereinrichtung kann in einem Bereich zwischen 400 und 435 nm liegen.

Ebenso gilt für alle Ausführungsbeispiele, dass die transmissiven Eigenschaften des zweiten Grundflächenabschnitts 4b durch wenigstens eine dem zweiten Grundflächenabschnitt 4b zugeordnete weitere optische, insbesondere dichroitische, Filtereinrichtung, insbesondere Langpassfiltereinrichtung, ausgebildet sein können. Die optischen Eigenschaften des zweiten Grundflächenabschnitts 4b können sonach ebenso die Charakteristik einer optischen Langpassfiltereinrichtung bzw. eines optischen Langpassfilters haben. Die Cut-On-Wellenlänge der optischen Langpassfiltereinrichtung kann in einem Bereich zwischen 435 nm und 450 nm oder oberhalb liegen.

Für alle Ausführungsbeispiele gilt, dass eine entsprechende erste optische Filtereinrichtung und eine entsprechende zweite optische Filtereinrichtung jeweils an oder in dem optischen Element 1 respektive an oder in dem Grundkörper 2 angeordnet oder ausgebildet sein können.

Eine Anordnung oder Ausbildung an dem optischen Element 1 respektive dem Grundkörper 2 bedeutet, dass die jeweilige optische Filtereinrichtung auf einem entsprechenden Grundflächenabschnitt 4a, 4b des Grundkörpers 2 angeordnet oder ausgebildet ist. Die optische Filtereinrichtung kann in diesem Fall z. B. durch eine zumindest abschnittsweise Beschichtung der Grundfläche 4 des Grundkörpers 2 gebildet sein. In der Variante, in welcher die jeweilige optische Filtereinrichtung auf dem optischen Element 1 respektive dem Grundkörper 2 angeordnet oder ausgebildet ist, kann die optische Filtereinrichtung z. B. durch eine, insbesondere auf einem Metall bzw. einer Metalllegierung oder einem Kunststoff basierende, Beschichtung des Grundkörpers 2 ausgebildet sein. Eine Beschichtung kann über ein oder mehrere chemische und/oder physikalische Verfahren aufgebracht bzw. ausgebildet sein. Beispielsweise kann die Beschichtung durch eine Tauchbeschichtung aufgebracht bzw. ausgebildet sein, da diese typischerweise eine besonders homogene Schichtbildung bzw. - dicke ermöglicht.

Eine Anordnung oder Ausbildung in dem optischen Element 1 respektive dem Grundkörper 2 bedeutet typischerweise, dass die jeweilige optische Filtereinrichtung innerhalb des optischen Elements 1 respektive des Grundkörpers 2 angeordnet oder ausgebildet ist. Die optische Filtereinrichtung kann in diesem Fall z. B. in Form von optisch wirksamen, d. h. insbesondere eine entsprechende Transmission bzw. Absorption herbeiführenden, anorganischen und/oder organischen Partikeln innerhalb des optischen Elements 1 respektive des Grundkörpers 2 verteilt angeordnet oder ausgebildet sein. In der Variante, in welcher die jeweilige optische Filtereinrichtung in dem optischen Element 1 respektive dem Grundkörper 2 angeordnet oder ausgebildet ist, kann die jeweilige optische Filtereinrichtung z. B. durch insbesondere auf einem Metall bzw. einer Metalllegierung oder einem Kunststoff basierende Partikel ausgebildet sein.

In allen Fällen ist die erste optische Filtereinrichtung typischerweise im Bereich des ersten Grundflächenabschnitts 4a angeordnet oder ausgebildet und die zweite optische Filtereinrichtung typischerweise im Bereich des zweiten Grundflächenabschnitts 4b angeordnet oder ausgebildet.

## Patentansprüche

1. Optische Linse für eine optische Sehhilfeeinrichtung (5), bevorzugt eine Sehhilfeeinrichtung zum Ausgleich von Sehschwächen, umfassend einen eine Grundfläche (4) aufweisenden Grundkörper (2), **dadurch gekennzeichnet, dass** die Grundfläche (4) einen ersten Grundflächenabschnitt (4a), welcher in einem Wellenlängenbereich zwischen 400 nm und 445 nm eine Transmission kleiner 60% und in einem Wellenlängenbereich zwischen 445 nm und 600 nm eine Transmission größer 60% aufweist, und
einen zweiten Grundflächenabschnitt (4b), welcher in einem Wellenlängenbereich zwischen 400 nm und 445 nm eine Transmission kleiner 60% aufweist und
in einem Wellenlängenbereich zwischen 445 nm und 600 nm eine Transmission kleiner 60% aufweist, wobei
die Transmission des ersten Grundflächenabschnitts (4a) in einem Wellenlängenbereich zwischen 445 nm und 500 nm wenigstens um den Faktor 1,5 ansteigt.

2. Optische Linse nach Anspruch 1, **dadurch gekennzeichnet, dass** der erste Grundflächenabschnitt (4a) in einem Wellenlängenbereich zwischen 400 nm und 445 nm eine Transmission kleiner oder gleich 50%, insbesondere kleiner 40%, bevorzugt kleiner oder gleich 30%, und
in einem Wellenlängenbereich zwischen 445 nm und 575 nm eine Transmission größer oder gleich 70%, insbesondere größer oder gleich 80%, bevorzugt größer oder gleich 90%, besonders bevorzugt größer oder gleich 95%, aufweist, und
der zweite Grundflächenabschnitt (4b) in einem Wellenlängenbereich zwischen 400 nm und 445 nm eine Transmission kleiner 40% aufweist und
in einem Wellenlängenbereich zwischen 445 nm und 575 nm Transmission kleiner 50% aufweist.

3. Optische Linse nach Anspruch 1 oder 2, **dadurch gekennzeichnet, dass** der erste und der zweite Grundflächenabschnitt (4a, 4b) in einem Wellenlängenbereich unterhalb 400 nm jeweils eine Transmission von weniger als 10% Transmission, insbesondere weniger als 5% Transmission, bevorzugt 0% Transmission, aufweisen.

4. Optische Linse nach einem der vorhergehenden Ansprüche, **dadurch gekennzeichnet, dass** der zweite Grundflächenabschnitt (4b) in einem Wellenlängenbereich zwischen 400 nm und 445 nm eine Transmission kleiner oder gleich 30% aufweist.

5. Optische Linse nach Anspruch 4, **dadurch gekennzeichnet, dass** der zweite Grundflächenabschnitt (4b) in einem Wellenlängenbereich zwischen 445 nm und 575 nm, insbesondere in einem Wellenlängenbereich zwischen 445 nm und 550 nm, eine Transmission kleiner 50% aufweist, wobei
der zweite Grundflächenabschnitt (4b) optional in einem Wellenlängenbereich zwischen 575 nm und 625 nm eine Transmission größer oder gleich 50%, insbesondere eine Transmission in einem Bereich zwischen 40 und 60%, aufweist, wobei
der zweite Grundflächenabschnitt (4b) optional in einem Wellenlängenbereich zwischen 625 nm und 650 nm eine Transmission in einem Bereich zwischen 50 und 60% aufweist, wobei
der zweite Grundflächenabschnitt (4b) optional in einem Wellenlängenbereich zwischen 650 nm und 750 nm eine Transmission in einem Bereich zwischen 60 und 85% aufweist.

6. Optische Linse nach Anspruch 5, **dadurch gekennzeichnet, dass** der zweite Grundflächenabschnitt (4b) in einem Wellenlängenbereich zwischen 650 nm und 750 nm einen, insbesondere rampenartigen, Anstieg der Transmission von 60% auf 85% aufweist.

7. Optische Linse nach Anspruch 6, **dadurch gekennzeichnet, dass** der zweite Grundflächenabschnitt (4b) in einem Wellenlängenbereich zwischen 445 nm und 600 nm, insbesondere in einem Wellenlängenbereich zwischen 445 nm und 550 nm, eine Transmission kleiner oder gleich 20% aufweist, wobei
der zweite Grundflächenabschnitt (4b) optional in einem Wellenlängenbereich zwischen 600 nm und 660 nm eine Transmission in einem Bereich zwischen 20 und 50% aufweist, wobei der zweite Grundflächenabschnitt (4b) optional in einem Wellenlängenbereich zwischen 600 nm und 660 nm einen, insbesondere rampenartigen, Anstieg der Transmission von 20% auf 50% aufweist, wobei
der zweite Grundflächenabschnitt (4b) optional in einem Wellenlängenbereich zwischen 660 nm und 700 nm eine Transmission oberhalb 50%, insbesondere oberhalb 80%, aufweist.

8. Optische Linse nach Anspruch 6 oder 7, **dadurch gekennzeichnet, dass** der zweite Grundflächenabschnitt (4b) in einem Wellenlängenbereich zwischen 660 nm und 700 nm einen, insbesondere rampenartigen, Anstieg der Transmission von 50% auf 85% aufweist.

9. Optische Linse nach einem der vorhergehenden Ansprüche, **dadurch gekennzeichnet, dass** die transmissiven Eigenschaften des ersten Grundflächenabschnitts (4a) durch wenigstens eine dem ersten Grundflächenabschnitt (4a) zugeordnete erste optische, insbesondere dichroitische, Filtereinrichtung, insbesondere Langpassfiltereinrichtung, ausgebildet sind und die transmissiven Eigenschaften des zweiten Grundflächenabschnitts (4b) durch wenigstens eine dem zweiten Grundflächenabschnitt (4b) zugeordnete zweite optische, insbesondere dichroitische, Filtereinrichtung, insbesondere Langpassfiltereinrichtung, ausgebildet sind.

10. Optische Linse nach Anspruch 9, **dadurch gekennzeichnet, dass** die erste optische Filtereinrichtung und die zweite optische Filtereinrichtung auf oder in der Grundfläche (4) angeordnet oder ausgebildet sind.

11. Optische Linse nach Anspruch 9 oder 10, **dadurch gekennzeichnet, dass** die erste optische Filtereinrichtung im Bereich des ersten Grundflächenabschnitts (4a) angeordnet oder ausgebildet ist und die zweite optische Filtereinrichtung im Bereich des zweiten Grundflächenabschnitts (4b) angeordnet oder ausgebildet ist.

12. Optische Linse nach einem der Ansprüche 9 bis 11, **dadurch gekennzeichnet, dass** der erste Grundflächenabschnitt (4a) sich über einen flächenmäßigen Anteil von 50 bis 70% der Grundfläche erstreckt und der zweite Grundflächenabschnitt (4b) sich über einen flächenmäßigen Anteil von 50 bis 30% der Grundfläche (4) erstreckt.

13. Optische Linse nach einem der Ansprüche 9 bis 12, **dadurch gekennzeichnet, dass** sich der erste Grundflächenabschnitt (4a) von einem ersten Randbereich der Grundfläche (4) in Richtung eines, insbesondere dem ersten Randbereich gegenüber liegenden, zweiten Randbereichs der Grundfläche (4) erstreckt und sich der zweite Grundflächenabschnitt (4b) von dem oder einem zweiten Randbereich der Grundfläche (4) in Richtung des oder eines, insbesondere dem zweiten Randbereich gegenüber liegenden, ersten Randbereichs der Grundfläche (4) erstreckt.

14. Optische Linse nach einem der vorhergehenden Ansprüche, **dadurch gekennzeichnet, dass** die transmissiven Eigenschaften des ersten Grundflächenabschnitts (4a) in Richtung des zweiten Grundflächenabschnitts (4b) einen sich in Richtung der transmissiven Eigenschaften des zweiten Grundflächenabschnitts (4b) graduell ändernden Verlauf aufweisen und/oder
die transmissiven Eigenschaften des zweiten Grundflächenabschnitts (4b) in Richtung des ersten Grundflächenabschnitts (4a) einen sich in Richtung der transmissiven Eigenschaften des ersten Grundflächenabschnitts (4a) graduell ändernden Verlauf aufweisen.

15. Sehhilfeeinrichtung (5), insbesondere zum Ausgleich von Sehschwächen, nach einem der vorhergehenden Ansprüche, **dadurch gekennzeichnet, dass** sie wenigstens eine optische Linse nach einem der vorhergehenden Ansprüche umfasst.

## Claims

1. Optical lens for an optical visual aid device (5), preferably a visual aid device for compensating for visual impairments, comprising a base body (2) having a base surface (4), **characterized in that**
the base area (4) is a first base area portion (4a) which transmits less than 60% in a wavelength range between 400 nm and 445 nm; and
has a transmission greater than 60% in a wavelength range between 445 nm and 600 nm; and
a second base area portion (4b) having a transmission of less than 60% in a wavelength range between 400 nm and 445 nm; and
has a transmission of less than 60% in a wavelength range between 445 nm and 600 nm, wherein:
the transmission of the first base area portion (4a) in a wavelength range between 445 nm and 500 nm increases at least by a factor of 1.5.

2. Optical lens according to claim 1, **characterized in that** the first base area portion (4a) in a wavelength range between 400 nm and 445 nm a transmission less than or equal to 50%, in particular less than 40%, preferably less than or equal to 30%, and
in a wavelength range between 445 nm and 575 nm, a transmission greater than or equal to 70%, in particular greater than or equal to 80%, preferably greater than or equal to 90%, particularly preferably greater than or equal to 95%, and
the second base area portion (4b) has a transmission of less than 40% in a wavelength range between 400 nm and 445 nm; and
has a transmission of less than 50% in a wavelength range between 445 nm and 575 nm.

3. Optical lens according to claim 1 or 2, **characterized in that** the first and the second base area portion (4a, 4b) in a wavelength range below 400 nm each have a transmission of less than 10% transmission, in particular less than 5% transmission, preferably 0% transmission.

4. Optical lens according to one of the preceding claims, **characterized in that** the second base area portion (4b) has a transmission of less than or equal to 30% in a wavelength range between 400 nm and 445 nm.

5. Optical lens according to claim 4, **characterized in that** the second base area portion (4b) has a transmission of less than 50% in a wavelength range between 445 nm and 575 nm, in particular in a wavelength range between 445 nm and 550 nm, wherein
the second base area portion (4b) optionally has a transmission greater than or equal to 50% in a wavelength range between 575 nm and 625 nm, in particular a transmission in a range between 40 and 60%, wherein
the second base area portion (4b) optionally has a transmission in a range between 50 and 60% in a wavelength range between 625 nm and 650 nm, wherein
the second base area portion (4b) optionally has a transmission in a range between 60 and 85% in a wavelength range between 650 nm and 750 nm.

6. Optical lens according to claim 5, **characterized in that** the second base area portion (4b) in a wavelength range between 650 nm and 750 nm has a, in particular ramp-like, increase in transmission from 60% to 85%.

7. Optical lens according to claim 6, **characterized in that** the second base area portion (4b) has a transmission of less than or equal to 20% in a wavelength range between 445 nm and 600 nm, in particular in a wavelength range between 445 nm and 550 nm, wherein
the second base area portion (4b) optionally in a wavelength range between 600 nm and 660 nm has a transmission in a range between 20 and 50%, wherein the second base area portion (4b) optionally in a wavelength range between 600 nm and 660 nm has a, in particular ramp-like, increase in transmission from 20% to 50%, wherein
the second base area portion (4b) optionally has a transmission above 50%, in particular above 80%, in a wavelength range between 660 nm and 700 nm.

8. Optical lens according to claim 6 or 7, **characterized in that** the second base area portion (4b) in a wavelength range between 660 nm and 700 nm has a, in particular ramp-like, increase in transmission from 50% to 85%.

9. Optical lens according to one of the preceding claims, **characterized in that** the transmissive properties of the first base area portion (4a) are formed by at least one of the first base area portion (4a) associated first optical, in particular dichroic, filter means, in particular long-pass filter means, and the transmissive properties of the second base area portion (4b) are formed by at least one of the second base area portion (4b) associated second optical, in particular dichroic, filter means, in particular long-pass filter means.

10. Optical lens according to claim 9, **characterized in that** the first optical filter device and the second optical filter device are arranged or formed on or in the base (4).

11. Optical lens according to claim 9 or 10, **characterized in that** the first optical filter means in the region of the first base area portion (4a) is arranged or formed and the second optical filter means in the region of the second base area portion (4b) is arranged or formed.

12. Optical lens according to any one of claims 9 to 11, **characterized in that** the first base area portion (4a) extends over an area portion of 50 to 70% of the base area and the second base area portion (4b) extends over an area portion of 50 to 30% of the base area (4).

13. Optical lens according to one of claims 9 to 12, **characterized in that** the first base area portion (4a) extends from a first edge region of the base area (4) in the direction of a, in particular, the first edge region opposite, second edge region of the base area (4) and the second base area portion (4b) extends from the or a second edge region of the base area (4) in the direction of the or a, in particular, the second edge region opposite, first edge region of the base area (4).

14. Optical lens according to one of the preceding claims, **characterized in that** the transmissive properties of the first base area portion (4a) in the direction of the second base area portion (4b) have a gradually changing course in the direction of the transmissive properties of the second base area portion (4b) and / or
the transmissive properties of the second base area portion (4b) in the direction of the first base area portion (4a) have a gradually changing course in the direction of the transmissive properties of the first base area portion (4a).

15. Visual aid device (5), in particular for compensating for visual impairments, according to one of the preceding claims, **characterized in that** it comprises at least one optical lens according to one of the preceding claims.

## Revendications

1. Lentille optique pour dispositif d'aide visuelle (5), de préférence un dispositif d'aide visuelle destiné à compenser les déficiences visuelles, comprenant un corps de base (2) ayant une surface de base (4), **caractérisé en ce que:**
la surface de base (4) est une première section de la surface de base (4a) dont la transmission est inférieure à 60% dans une gamme de longueurs d'onde comprise entre 400 nm et 445 nm; et
a une transmission supérieure à 60 % dans une gamme de longueurs d'onde comprise entre 445 et 600 nm; et
une deuxième section de base (4b) ayant une transmission inférieure à 60% dans une gamme de longueurs d'onde comprise entre 400 nm et 445 nm; et
une transmission inférieure à 60% dans une gamme de longueurs d'onde comprise entre 445 nm et 600 nm, où:
la transmission de la première section de la surface de base (4a) dans une gamme de longueurs d'onde comprise entre 445 nm et 500 nm augmente d'au moins 1,5.

2. Lentille optique selon la revendication 1, **caractérisée en ce que** la première section de surface de base (4a) dans une gamme de longueurs d'onde comprise entre 400 nm et 445 nm a une transmission inférieure ou égale à 50%, en particulier inférieure à 40%, de préférence inférieure ou égale à 30%, et
ayant une transmission supérieure ou égale à 70 %, en particulier supérieure ou égale à 80 %, de préférence supérieure ou égale à 90 %, de préférence supérieure ou égale à 95 %, dans une gamme de longueurs d'onde comprise entre 445 nm et 575 nm; et
la deuxième section de la surface de base (4b) a une transmission inférieure à 40 % dans une gamme de longueurs d'onde comprise entre 400 nm et 445 nm; et
ayant une transmission inférieure à 50% dans une gamme de longueurs d'onde comprise entre 445 nm et 575 nm.

3. Lentille optique selon la revendication 1 ou 2, **caractérisée en ce que** les première et deuxième sections de la surface de base (4a, 4b) ont chacune une transmission inférieure à 10% dans une gamme de longueurs d'onde inférieure à 400 nm, en particulier moins de 5% de transmission, de préférence 0% de transmission.

4. Lentille optique selon l'une quelconque des revendications précédentes, **caractérisée en ce que** la deuxième section de la surface de base (4b) présente une transmission inférieure ou égale à 30% dans une gamme de longueurs d'onde comprise entre 400 nm et 445 nm.

5. Lentille optique selon la revendication 4, **caractérisée en ce que** la deuxième section de la surface de base (4b) présente une transmission inférieure à 50% dans une gamme de longueurs d'onde comprise entre 445 nm et 575 nm, en particulier dans une gamme de longueurs d'onde comprise entre 445 nm et 550 nm, dans laquelle:
la deuxième section de la surface de base (4b) présente, en option, une transmission supérieure ou égale à 50 % dans une gamme de longueurs d'onde comprise entre 575 nm et 625 nm, en particulier une transmission dans une gamme comprise entre 40 et 60 %,
étant entendu que:
la deuxième section de la surface de base (4b) présente, en option, une transmission dans une plage de longueurs d'onde comprise entre 625 nm et 650 nm, dans une plage comprise entre 50 et 60%, où:
la deuxième section de la surface de base (4b) présente, en option, une transmission dans une plage de longueurs d'onde comprise entre 650 nm et 750 nm, dans une plage comprise entre 60 et 85 %.

6. Lentille optique selon la revendication 5, **caractérisée en ce que** la deuxième section de surface de base (4b) présente, dans une gamme de longueurs d'onde comprise entre 650 nm et 750 nm, une augmentation de la transmission, en particulier de type rampe, de 60% à 85%.

7. Lentille optique selon la revendication 6, **caractérisée en ce que** la deuxième section de la surface de base (4b) a une transmission inférieure ou égale à 20% dans une gamme de longueurs d'onde comprise entre 445 nm et 600 nm, en particulier dans une gamme de longueurs d'onde comprise entre 445 nm et 550 nm, dans laquelle:
la deuxième section de base (4b) présente, en option, une transmission comprise entre 20 et 50% dans une gamme de longueurs d'onde comprise entre 600 nm et 660 nm, tandis que la deuxième section de base (4b) présente, en option, une augmentation de la transmission de 20% à 50% dans une gamme de longueurs d'onde comprise entre 600 nm et 660 nm, en particulier de type rampe, où:
la deuxième section de la surface de base (4b) présente, en option, une transmission supérieure à 50%, en particulier au-dessus de 80%, dans une gamme de longueurs d'onde comprise entre 660 nm et 700 nm.

8. Lentille optique selon la revendication 6 ou 7, **caractérisée en ce que** la deuxième section de la surface de base (4b) présente, dans une gamme de longueurs d'onde comprise entre 660 nm et 700 nm, une augmentation de la transmission de 50% à 85%, en particulier de type rampe.

9. Lentille optique selon l'une quelconque des revendications précédentes, **caractérisée en ce que** les propriétés transmissives de la première section de surface de base (4a) sont formées par au moins un premier dispositif de filtration optique, en particulier dichroïque, affecté à la première section de surface de base (4a), et les propriétés transmissives de la deuxième section de surface de base (4b) sont formées par au moins un deuxième dispositif de filtration optique, en particulier dichroïque, affecté à la deuxième section de surface de base (4b), en particulier dispositif de filtration passe-long.

10. Lentille optique selon la revendication 9, **caractérisée en ce que** le premier dispositif de filtration optique et le deuxième dispositif de filtration optique sont disposés ou formés sur ou dans la surface de base (4).

11. Lentille optique selon la revendication 9 ou 10, **caractérisée en ce que** le premier dispositif de filtration optique est situé ou formé dans la zone de la première section de base (4a) et le second dispositif de filtration optique est situé ou formé dans la zone de la deuxième section de base (4b).

12. Lentille optique selon l'une quelconque des revendications 9 à 11, **caractérisée en ce que** la première partie de la surface de base (4a) s'étend sur une part en surface de 50 à 70% de la surface de base et que la deuxième partie de la surface de base (4b) s'étend sur une part en surface de 50 à 30% de la surface de base (4).

13. Lentille optique selon l'une quelconque des revendications 9 à 12, **caractérisée en ce que** la première section de surface de base (4a) s'étend d'une première zone de bordure de la surface de base (4) vers une deuxième zone de bordure de la surface de base (4), en particulier en face de la première zone de bordure, et que la deuxième section de surface de base (4b) s'étend de la ou d'une deuxième zone de bordure de la surface de base (4) vers la ou une première zone de bordure de la surface de base (4), en particulier en face de la deuxième zone de bordure.

14. Lentille optique selon l'une quelconque des revendications précédentes, **caractérisée en ce que** les propriétés transmissives de la première partie de la surface de base (4a) dans le sens de la deuxième partie de la surface de base (4b) présentent une évolution graduellement différente dans le sens des propriétés transmissives de la deuxième partie de la surface de base (4b) et/ou
les caractéristiques transmissives de la deuxième partie de la surface de base (4b) dans la direction de la première partie de la surface de base (4a) présentent une évolution graduelle dans la direction des caractéristiques transmissives de la première partie de la surface de base (4a).

15. Dispositif d'aide visuelle (5), en particulier pour compenser des déficiences visuelles, selon l'une quelconque des revendications précédentes, **caractérisé en ce qu'il** comprend au moins une lentille optique selon l'une quelconque des revendications précédentes.
